# DEMANDE DE BREVET EUROPEEN

(11) **EP 0 697 636 A1**
(43) Date de publication de la demande: **21.02.1996**
(21) Numéro de dépôt: 95111948.6
(22) Date de dépôt: 29.07.1995
(51) Int. Cl.: G04C 10/02

(54) **Pièce d'horlogerie alimentée par des cellules solaires**

(30) Priorité: 16.08.1994 CH 2517/94
(71) Demandeur: ASULAB S.A., CH-2501 Bienne (CH)
(72) Inventeur: Diego, Fischer, CH-2000 Neuchâtel (CH)
(74) Mandataire: Patry, Didier Marcel Pierre

(57) **Abrégé**

L'invention concerne une pièce d'horlogerie (P) comprenant:
- un boîtier (1) recouvert d'une glace (2),
- des moyens horométriques (3) disposés dans ledit boîtier (1),
- des moyens d'affichage (4) reliés auxdits moyens horométries (3) et visible à travers ladite glace (2),
- une source d'énergie photovoltaïque (S) en silicium disposée sur la face interne de ladite glace (2). Cette pièce est caractérisée en ce que
- ladite source d'énergie (S) comporte au moins une cellule photovoltaïque multi-jonctions (C) faite d'une pluralité de couches superposées définissant au moins un premier et un deuxième élément p-i-n constituant chacun une cellule élémentaire (11,12,13; 11',12') connectées en série, et en ce que
- ladite source (S) est disposée et conformée de manière à occuper au moins la presque-totalité de la périphérie de la glace (2) et à laisser subsister une fenêtre d'observation desdits moyens d'affichage (4).

## Description

La présente invention concerne une pièce d'horlogerie comprenant une source photovoltaïque en silicium, et notamment une pièce d'horlogerie comprenant un boîtier recouvert d'une glace, des moyens horométriques disposés dans ledit boîtier et capables de fournir une information horaire, des moyens d'affichage connectés auxdits moyens horométriques et apparaissant à travers ladite glace pour permettre la lecture de l'information horaire, et une source d'énergie photovoltaïque en silicium capable de transformer un rayonnement lumineux en un courant électrique, ladite source d'énergie étant disposée sur la face interne de ladite glace.

On sait qu'une cellule solaire en silicium ne peut fournir au maximum qu'une tension comprise en général entre 400 et 500 mV dans le cas de basse intensité, typique pour l'utilisation prévue. Pour avoir une tension suffisante pour alimenter les moyens horométriques d'une pièce d'horlogerie, au minimum une tension de 1,2V, il faut donc au moins trois cellules solaires connectées en série.

On connaît déjà de telles pièces d'horlogerie. Par exemple, la demande de brevet japonaise JP-A-56 51 691 décrit une telle pièce d'horlogerie comprenant plusieurs cellules solaires en silicium et plus particulièrement en silicium amorphe. Ces cellules solaires sont juxtaposées et connectées en série sur la face interne de la glace de la montre.

Toutefois, la tension de sortie de la source d'énergie photovoltaïque dépend du courant fourni par les cellules, mais quand les cellules sont connectées en série ce courant est imposé par la cellule qui en fournit le moins. Donc, chaque fois qu'une ou plusieurs cellules solaires sont plus ou moins masquées, celles-ci ne fournissent plus de courant, et la tension de sortie de la source d'énergie qui est la somme des tensions fournies par les cellules solaires varie alors en fonction de ce masquage. Les variations de la tension de sortie peuvent alors être très grandes, de sorte qu'elles peuvent empêcher un fonctionnement correct de la pièce d'horlogerie.

On comprend ainsi que si la disposition des cellules est telle qu'une ou plusieurs cellules peuvent facilement être masquées, la tension de sortie risque de tomber au-dessous de la tension minimum nécessaire pour faire fonctionner correctement la pièce d'horlogerie.

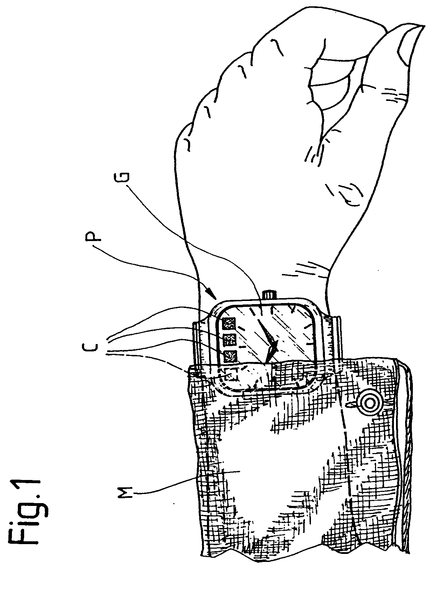

Ce problème est connu, en particulier pour les montres-bracelets, sous le terme "effet de manche" pour le cas d'un masquage dans un seul sens. Cet effet de manche, représenté schématiquement à la figure 1, peut être causé par exemple par une manche M d'une chemise, qui couvre partiellement la glace G de la montre-bracelet P portée par son utilisateur. Si les cellules sont disposées de manière conforme à l'enseignement de l'état de la technique mentionné ci-dessus, la tension fournie par la source peut alors tomber au-dessous du seuil de bon fonctionnement quand la manche M de l'utilisateur couvre une ou plusieurs cellules solaires C.

Bien entendu, d'autres formes et causes de masquages empêchant une exposition de toutes les cellules au rayonnement lumineux sont également possibles. Par exemple un masquage dans une direction perpendiculaire à celle décrite ci-dessus pour l'effet de manche est possible dans le cas où un objet ou une main de l'utilisateur couvre plus ou moins les cellules.

Un but de la présente invention est d'apporter une solution à ces problèmes en présentant une pièce d'horlogerie comprenant une source d'énergie photovoltaïque connectée et disposée de manière que l'effet de manche ou une autre forme de masquage n'a pas ou pratiquement pas d'influence sur la tension fournie par cette source afin de limiter les variations pour ainsi assurer un niveau d'alimentation électrique toujours suffisant pour le bon fonctionnement de la pièce d'horlogerie.

Ce but est atteint grâce aux caractéristiques particulières que présente la pièce d'horlogerie de la revendication 1.

Grâce à ces caractéristiques, la source d'énergie de la pièce d'horlogerie selon l'invention peut, même en cas de masquages tels que décrits ci-dessus, fournir une tension suffisante. De plus, ces caractéristiques évitent des variations de la tension de sortie fournie par la source d'énergie et la rendent donc plus stable.

Ces caractéristiques permettant en outre d'obtenir une tension suffisant en utilisant plus efficacement la surface disponible sur l pièce d'horlogerie pour les cellules. Ainsi, la pièce peut être réduite en grandeur sans devoir renoncer à une source photovoltaïque.

Ces caractéristiques permettant également de simplifier les masques nécessaires à la fabrication de la cellule photovoltaïque et de réaliser celle-ci de manière qu'elle ne nuise pas à l'esthétique de la pièce d'horlogerie. En effet, comme la cellule photovoltaïque est disposée de manière à occuper au moins la presque-totalité de la périphérie de la pièce d'horlogerie, le cadran de ladite pièce peut être le même que celui utilisé pour une pièce sans source photovoltaïque, c'est-à-dire le cadran peut rester inchangé.

D'autres caractéristiques et avantages de l'invention apparaîtront mieux à la lecture de la description détaillée qui suit, et qui sera faite en se référant aux dessins annexés, donnés à titre d'exemple uniquement, et dans lesquels :
- la figure 1 est une représentation schématique d'une pièce d'horlogerie de l'art antérieur qui démontre "l'effet de manche" mentionné ci-dessus,
- la figure 2 est une vue en coupe représentant de façon schématique une pièce d'horlogerie selon l'invention,
- la figure 3 est une vue schématique brisée représentant en coupe transversale une cellule photovoltaïque équipant une pièce d'horlogerie selon l'invention dans un premier mode de réalisation,
- la figure 4 est une vue de face représentant schématiquement une pièce d'horlogerie selon ce premier mode de réalisation de l'invention,
- la figure 5 est une vue schématique brisée représentant en coupe transversale une cellule photovoltaïque équipant une pièce d'horlogerie selon l'invention dans un deuxième mode de réalisation, et
- la figure 6 est une vue de face représentant schématiquement une pièce d'horlogerie selon ce deuxième mode de réalisation.

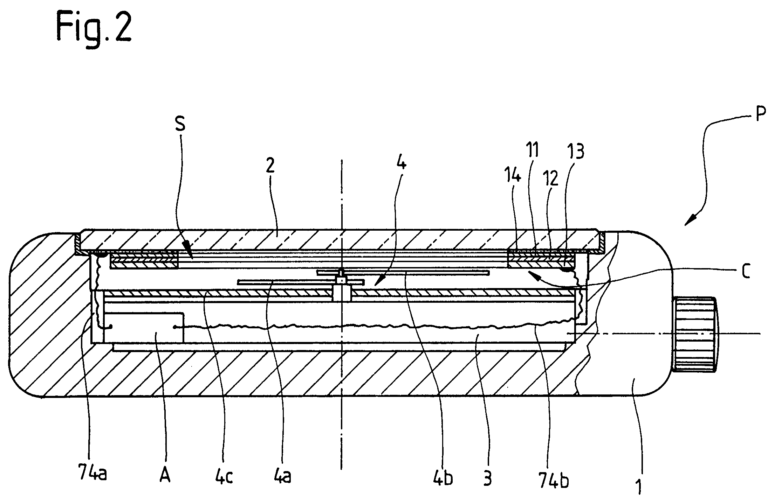

La figure 2 est une vue en coupe représentant de façon schématique une pièce d'horlogerie selon l'invention, désignée par la référence P.

La pièce d'horlogerie P comprend un boîtier 1 qui est recouvert d'une glace 2. A l'intérieur du boîtier est logé classiquement un mouvement comprenant entre autres un moteur et formant des moyens de mesure du temps, dits moyens horométriques 3. La pièce P comporte de plus des moyens d'affichage, référencé 4, reliés de façon classique aux moyens horométriques 3 et qui sont visible à travers la glace 2 de la pièce d'horlogerie P.

Les moyens d'affichage 4 sont constitués dans l'exemple représenté par des indicateurs d'heures et de minutes formés respectivement par une aiguille des heures 4a, une aiguille des minutes 4b et un cadran 4c. Bien entendu, ces moyens d'affichage peuvent être constitués par des cristaux liquides affichant l'heure d'une manière numérique.

L'agencement et la coopération des moyens horométriques 3 et des moyens d'affichages 4 étant donc classiques, on n'en fournira pas ici de description plus détaillée.

La pièce d'horlogerie P comporte une source d'énergie photovoltaïque S comprenant au moins une cellule photovoltaïque C capable de transformer un rayonnement lumineux en un courant électrique par un processus appelé photo-génération, comme cela sera expliqué plus en détail ci-après, pour alimenter les moyens horométriques 3. Cela peut être réalisé par exemple via un circuit d'alimentation A permettant d'alimenter un organe moteur, non représenté, de la pièce d'horlogerie fonctionnant de façon électrique. A cet effet, la cellule C est liée au circuit d'alimentation A par l'intermédiaire de conducteurs 74a et 74b. L'organe moteur peut être piloté par un circuit de commande horloger de structure classique auquel cet organe est relié électriquement. Tout ceci est bien connu de l'homme de l'art et ne sera pas expliqué plus en détail ici.

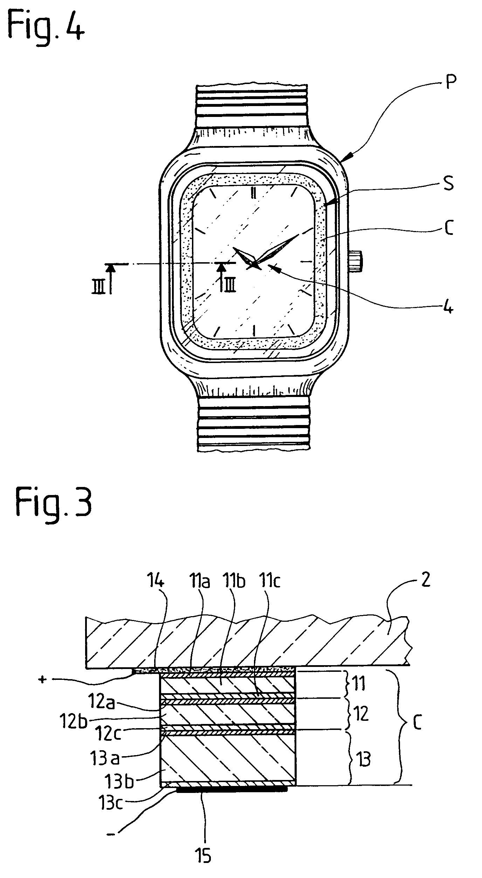

Dans la forme d'exécution des figures 3 et 4, la source d'énergie S comporte une seule cellule photovoltaïque C dont la glace 2 elle-même constitue le substrat. En effet, la cellule C est déposée sur la face interne de la glace 2 de la pièce d'horlogerie P.

Comme on le verra plus loin en détail, la cellule photovoltaïque C est une cellule multi-jonctions réalisée par une superposition de plusieurs cellules solaires élémentaires constituées chacune de trois couches minces en silicium ou en alliage de silicium empilées définissant une diode p-i-n, c'est-a-dire une diode à jonction p-n comportant une zone intrinsèque, comprise entre une zone p et une zone n, qui peut être exposée à un rayonnement lumineux traversant la très mince zone ou couche p. Les diverses couches constituant chaque cellule photovoltaïque C sont déposées les unes sur les autres de manière que les cellules photovoltaïques élémentaires soient branchées en série.

La figure 3 est une vue schématique brisée représentant en coupe transversale une cellule photovoltaïque C équipant la pièce d'horlogerie P selon l'invention dans un premier mode de réalisation. La cellule C est constituée ici de trois cellules photovoltaïques élémentaires 11, 12, 13, empilées l'une sur l'autre. C'est-à-dire qu'après les étapes standards de déposition d'une première diode p-i-n, constituant une première cellule élémentaire 11, sur la face interne de la glace 2 de la pièce d'horlogerie P, les opérations de déposition ont été répétées pour superposer deux autres diodes de même type (p-i-n) à la première. On obtient ainsi une structure p-i-n-p-i-n-p-i-n.

La source photovoltaïque S comprend un substrat transparent à la lumière, tel que du verre, ici la glace 2 elle-même de la pièce d'horlogerie P. La face interne de la glace 2 est revêtu d'une couche 14 d'un oxyde conducteur transparent (=TCO, l'abréviation anglaise pour Transparant Conductive Oxyde) qui a de préférence une épaisseur aussi faible que possible, par exemple de l'ordre de quelques dizaines de nanomètres, afin de laisser passer le plus possible de rayonnement lumineux. En effet, l'épaisseur de cette couche TCO est choisie de façon à optimaliser la relation entre la transmission de la lumière et la conductance électrique de cette couche. Cette couche 14 sert à fixer le conducteur 74a (voir la figure 2) afin de relier la cellule C au circuit d'alimentation A. Les trois cellules élémentaires 11, 12 et 13 qui sont similaires les unes aux autres sont déposées en superposition sur cette couche de TCO 14.

Chaque cellule élémentaire 11, 12, 13 est constituée de trois couches de matériaux semi-conducteurs ayant des types de conductivité différents pour ainsi constituer une diode p-i-n. La première couche 11a, 12a, 13a de chaque cellule élémentaire est dopée par exemple avec du bore afin d'obtenir une conductivité de type p. L'épaisseur de cette couche est de préférence de l'ordre de 10 nm. La couche suivante 11b, 12b, 13b de chaque cellule élémentaire est une couche intrinsèque i qui est plus épaisse que la couche p précédente et dans laquelle un courant est photo-généré lors qu'elle est exposée à un rayonnement lumineux. Pour une raison qui sera donnée plus loin, la couche 11b qui est la plus proche de la glace 2, a une épaisseur par exemple de l'ordre de 50 nm, alors que les couches 12b et 13b, faisant partie de la deuxième et de la troisième cellule élémentaire 12 et 13, ont une plus grande épaisseur, par exemple de l'ordre de 200 à 300 nm. Toutefois, ces épaisseurs sont en fonction des alliages utilisés et sont en général adaptées à l'absorption de la lumière souhaitée.

La troisième couche 11c, 12c, 13c de chaque cellule élémentaire qui est dopée par exemple avec du phosphore afin d'obtenir une conductivité de type n. L'épaisseur de cette couche est par exemple de l'ordre de 10 à 20 nm. De préférence, ces couches 11c, 12c et 13c sont déposées d'une manière qui leur donne une structure micro-cristalline. L'avantage d'une couche micro-cristalline est que celle-ci a une énergie d'activation très faible, c'est-à-dire qu'elle favorise la recombinaison des paires électron-trou qui atteignent les interfaces entre la couche 11c de la première cellule élémentaire 11 et la couche 12a de la deuxième cellule 12 et entre la couche 12c de la deuxième cellule élémentaire 12 et la couche 13a de la troisième cellule élémentaire 13. Une couche conductrice 15, qui est destinée à recevoir le conducteur 74b (voir aussi la figure 2) afin de fermer le circuit électrique d'alimentation est déposée sur la cellule élémentaire 13.

Pour expliquer le fonctionnement de la source S, il est important de comprendre ce qui se passe aux interfaces entre les cellules 11 et 12 et, respectivement, les cellules 12 et 13. Le rayonnement lumineux incident sur les cellules génère un courant dans ces cellules par des créations des électrons et des trous, un processus appelé photo-génération. Les électrons qui sont donc photo-générés par le rayonnement lumineux dans la cellule supérieur 11 respectivement 12 et les trous photo-générés dans la cellule inférieure 12 respectivement 13 sont transportés vers les interfaces entre respectivement les cellules élémentaires 11 et 12, et les cellules élémentaires 12 et 13 où ils recombinent par l'effet tunnel. Ces interfaces sont alors appelées "tunnel-jonction".

Ainsi, la configuration de chaque cellule photovoltaïques C comprend une voie optique avec les trois cellules solaires élémentaires 11, 12 et 13 connectées électriquement en série par la jonction p-n recombinante, dite la tunnel-jonction entre chaque cellule élémentaire. Chaque cellule 11, 12 et 13 fournit alors son propre courant à la source S. Comme ces cellules 11, 12 et 13 sont connectées en série, les tensions fournies par les cellules élémentaires peuvent être additionnées pour déterminer la tension de la source S. L'ensemble des cellules élémentaires 11, 12 et 13 fournit ainsi suffisamment de tension pour assurer une tension de sortie de la source assez haute, autour de 1,2 à 1,5 V, pour faire fonctionner la pièce d'horlogerie même dans des conditions d'un très faible rayonnement lumineux, comme cela sera expliqué plus en détail ci-après.

Afin d'obtenir une source d'énergie comprenant plusieurs cellules élémentaires empilées, il faut tenir compte des épaisseurs des différentes couches et des différents matériaux utilisés pour chacune de ces cellules. Le rayonnement lumineux doit pouvoir atteindre non seulement la cellule supérieure, ici la première cellule 11, mais également les autres cellules, ici les cellules 12 et 13. Ces cellules élémentaires doivent chacune générer un courant engendré par le rayonnement lumineux incident qui est de même ordre, parce que, comme cela a déjà été expliqué ci-dessus, le courant le plus bas des courants fournis par les cellules élémentaires 11, 12 et 13 détermine le courant total fourni par la source photovoltaïque S.

Or, l'homme du métier sait que l'absorption de la lumière par une couche dépend de l'épaisseur et du matériau de cette couche. Donc, il faut choisir les matériaux tels qu'on obtient des filtres spectraux, et des épaisseurs qui permettent d'atteindre un certain niveau de photo-génération pour obtenir une source qui livre suffisamment de tension.

Le silicium qui est utilisé pour les diverses couches décrites ci-dessus est de préférence de silicium amorphe (a-Si:H) pour des raisons de coût de fabrication et a la propriété de s'allier facilement avec d'autres matériaux tels que le germanium, le carbone, les nitrites ou les oxydes, changeant ainsi ses propriétés électro-optiques. La propriété qui nous intéresse ici est la distance entre deux niveaux d'énergie qui peuvent être occupés par les électrons. Cette distance est généralement appelée bande interdite (ou "band gap", qui est l'expression anglaise correspondante utilisée couramment). La largeur de cette bande interdite dépend du matériau. Cette largeur est exprimée par le paramètre E_{g}. Donc, c'est en jouant sur ce paramètre dans les couches intrinsèques 11b, 12b et 13b des différentes cellules élémentaires qu'on peut obtenir des comportements optimalisés pour chaque cellule élémentaire, qui permettent des rendements globaux élevés; en absorbant plus de lumière, d'une part, et en profitant mieux de l'énergie des photons des diverses longueurs d'onde, d'autre part.

La couche intrinsèque 11b de la première cellule élémentaire 11 peut être constituée de carbure de silicium amorphe (a-SiC:H), de nitrite de silicium amorphe (a-SiN:H) ou encore d'oxyde de silicium amorphe (a-SiO:H). Par exemple, si on utilise du carbure de silicium amorphe (a-SiC:H), ayant une largeur de bande interdite Eg ≧ 2,0 eV, pour la couche intrinsèque 11b de la première cellule élémentaire 11, celle-ci absorbe essentiellement les photons de courte longueur d'onde ayant une haute énergie. La largeur de la bande interdite étant élevée, il y a peu de pertes par thermalisation lors de la création de paires électron-trou. On profite ainsi mieux de la haute énergie de la lumière bleue, ce qui a pour conséquence d'augmenter la tension livrée par la cellule. Les photons de longueur d'onde plus longue, ayant une plus basse énergie, quant à eux, traversent une telle cellule sans être absorbés. La couche intrinsèque 12b de la deuxième cellule élémentaire 12 est de préférence en silicium amorphe (a-Si:H), ayant une largeur de bande interdite Eg ≈ 1,76 eV, et absorbe les photons d'énergie moyenne. La couche intrinsèque 13b de la troisième cellule élémentaire 13 peut alors être par exemple, en alliage de germanium et de silicium amorphe (a-SiGe:H), ayant une largeur de bande interdite de E_{g} ≦ 1,5 eV, et absorber ainsi les photons de plus basse énergie, pour lesquels le silicium amorphe est presque transparent.

Toutefois, on a remarqué qu'une cellule en alliage de germanium et de silicium amorphe est plutôt sensible à la lumière infrarouge et fournit une tension réduite. Ceci n'est pas très intéressant dans l'application de l'objet de la présente invention où il s'agit de préférence d'une pièce d'horlogerie telle qu'une montre-bracelet qui n'est souvent exposée à la lumière du jour qu'à l'intérieur d'un bâtiment où la composante infrarouge de cette lumière est faible. On a constaté, que dans ces conditions les meilleurs résultats sont obtenus lorsque la première cellule élémentaire 11 est en un matériau ayant une largeur de bande E_{g} élevé (E_{g} ≧ 2 eV), la deuxième cellule élémentaire 12 est en un matériau ayant une largeur de bande E_{g} élevé ou normale (E_{g} ≈ 1,75 eV), et la troisième cellule élémentaire 13 est en un matériau ayant une largeur de bande E_{g} normale correspondante à celle de silicium amorphe. Les épaisseurs des cellules élémentaires 11, 12 et 13 sont alors adaptées en fonction des matériaux choisis, afin d'avoir le même courant généré par chacune des cellules élémentaires.

Ainsi, les trois cellules élémentaires 11, 12 et 13 subissent les mêmes conditions d'éventuels masquages. La tension de sortie de la source S ne variera donc que très peu si les cellules ne sont pas totalement masquées: le courant traversant la cellule photovoltaïque C étant imposé par la cellule qui en fournit le moins; comme les conditions de masquages sont identiques pour toutes les cellules, elles peuvent chacune livrer un courant de même grandeur. La tension totale livrée à la source S restera alors aussi stable.

La figure 4 est une vue de face représentant schématiquement une pièce d'horlogerie selon l'invention dans un premier mode de réalisation dans lequel la source d'énergie S comprend une seule cellule multi-jonctions C formée de trois cellules élémentaires 11, 12, 13 empilées, comme cela a été expliqué ci-dessus.

Cette cellule est disposée de manière à optimaliser la quantité de l'énergie qu'elle fournit à la pièce d'horlogerie P.

En effet, la cellule photovoltaïque C est disposée de manière à occuper la totalité de la périphérie de la glace 2 de la pièce d'horlogerie P en laissant subsister une fenêtre d'observation des moyens d'affichage 4. Ainsi, la disposition garantit une exposition maximale au rayonnement lumineux et évite des variations dans la tension de sortie de la source S dues à des masquages partiels. Par exemple, dans le cas de l'effet de manche couvrant partiellement la pièce P, la tension de sortie restera stable, car il y a toujours une partie de la cellule photovoltaïque C, et donc des trois cellules élémentaires empilées 11, 12 et 13, qui continue à recevoir de la lumière.

Pour déterminer les dimensions latérales de la cellule photovoltaïque C il y a plusieurs paramètres qui doivent être prises en compte. Comme cela a été expliqué ci-dessus, il y a une piste conductrice, la couche TCO 14, entre la glace 2 et la cellule photovoltaïque C. La résistance de cette couche 14 dépend de sa surface, c'est-à-dire si cette couche 14 est trop longue par rapport aux densités de courants générés par la cellule, elle ne fonctionne plus bien comme piste conductrice. En outre, la puissance que la source peut fournir, qui est une fonction linéaire de la surface exposée, dépend de la largeur de la cellule et donc de la largeur de cette couche 14. Il faut donc trouver un équilibre entre l'esthétique de la pièce d'horlogerie et son fonctionnement. Mais la puissance nécessaire au fonctionnement d'une pièce d'horlogerie telle qu'une montre-bracelet étant relativement basse, on a constaté qu'il est possible de choisir une largeur adéquate pour la cellule C sans nuire à l'esthétique de la pièce d'horlogerie P.

On comprend ainsi aussi que grâce à l'utilisation d'une source constituée de plusieurs cellules solaires élémentaires empilées, les masques nécessaires pour la déposition des cellules sont plus simples que ceux qui doivent être utilisées dans l'art antérieur, où il fallait positionner latéralement plusieurs cellules indépendantes interconnectées.

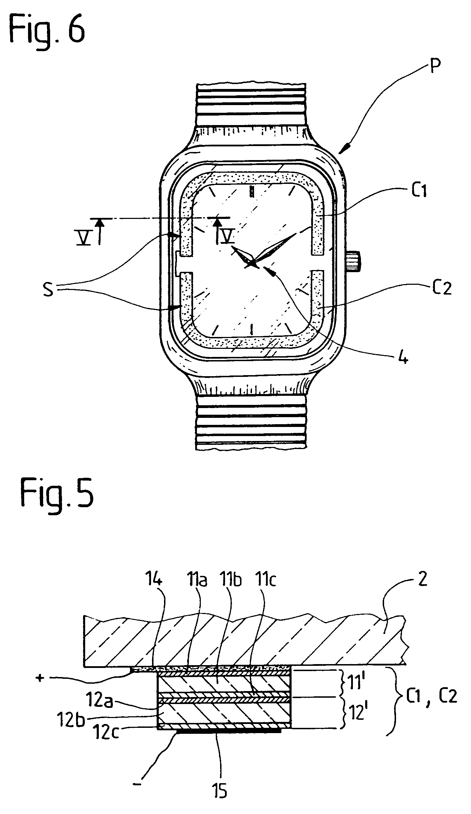

La figure 5 est une vue schématique brisée représentant en coupe transversale une cellule photovoltaïque équipant la pièce d'horlogerie P selon un deuxième mode de réalisation de l'invention représentée à la figure 6.

Dans ce deuxième mode de réalisation, la source S comprend deux cellules photovoltaïques identiques C1 et C2 juxtaposées et connectées en série. Chaque cellule photovoltaïques C1 et C2 est constituée de deux cellules élémentaires 11', 12' superposées. On voit que la source S étant ainsi constituée de quatre cellules élémentaires branchées en série, elle peut fournir une tension suffisante pour que la pièce d'horlogerie P fonctionne.

La composition de chaque cellule élémentaire 11' et 12' est comparable à celle des cellules élémentaires 11 et 12 selon le premier mode de réalisation décrite ci-dessus à l'aide de la figure 3. Ici, entre chaque cellule photovoltaïque C1 et C2 et la face interne de la glace 2 de la pièce d'horlogerie P est déposée une même couche conductrice 14 sous forme d'un oxyde transparent conducteur TCO. Les deux cellules élémentaires 11' et 12' sont déposées en superposition sur la couche TCO 14. Ici aussi, les cellules élémentaires 11' et 12' comprennent chacune trois couches constituant un ensemble de deux diodes p-i-n. La première cellule élémentaire 11' peut être identique à la cellule élémentaire 11, et la deuxième cellule élémentaire 12' peut être identique à la cellule élémentaire 12 ou 13. Une couche conductrice 15 est déposée sur la deuxième cellule élémentaire 12'. Cette couche 15 ne sert pas seulement à fermer le circuit électrique d'alimentation au moyen du conducteur 74b comme cela est le cas dans le premier mode de réalisation expliqué ci-dessus, mais rend aussi possible la liaison entre les deux cellules photovoltaïques C1 et C2, par exemple par un fil conducteur classique (non représenté) reliant la couche 15 de la cellule C1 à la couche 14 de la cellule C2.

Dans ce deuxième mode de réalisation, la première cellule élémentaire 11' est de préférence d'un matériau ayant une largeur de bande E_{g} élevé (E_{g} ≧ 2 eV), par exemple en carbure de silicium amorphe (a-SiC:H), tandis que la deuxième cellule élémentaire 12' est de préférence d'un matériau ayant une largeur de bande E_{g} normale, par exemple en silicium amorphe (a-Si:H).

A la figure 6, qui est une vue de face représentant schématiquement une pièce d'horlogerie selon le deuxième mode de réalisation, on voit la disposition particulière de la source d'énergie S. Cette source S comporte donc deux cellules C1 et C2 raccordées en série latéralement, et qui sont séparées l'une de l'autre selon une ligne qui est orientée selon l'axe 3h-9h de la pièce d'horlogerie P.

En effet, on comprend ainsi que la disposition des cellules selon ce deuxième mode de réalisation est aussi efficace et insensible aux variations dues aux masquages par "l'effet de manche" que la disposition selon le premier mode de réalisation. Par contre, la sensibilité pour un masquage des cellules dans une direction perpendiculaire é celle de "l'effet de manche" a augmenté par rapport au premier mode. Cependant, cette réalisation permet d'obtenir, d'une part, une tension de sortie de la source qui est plus élevée, et d'autre part, une simplification du procédé de dépôts en évitant des dépôts des couches supplémentaires qui sont nécessaires pour la troisième cellule élémentaire 13 du premier mode de réalisation.

## Revendications

1. Pièce d'horlogerie (P) comprenant :
- un boîtier (1) recouvert d'une glace (2),
- des moyens horométriques (3) disposés dans ledit boîtier (1),
- des moyens d'affichage (4) reliés auxdits moyens horométries (3) et visible à travers ladite glace (2),
- une source d'énergie photovoltaïque (S) en silicium capable de transformer un rayonnement lumineux en un courant électrique, ladite source d'énergie (S) étant disposée sur la face interne de ladite glace (2),
caractérisée en ce que
- ladite source d'énergie (S) comporte au moins une cellule photovoltaïque multi-jonctions (C) faite d'une pluralité de couches superposées définissant au moins un premier et un deuxième élément p-i-n constituant chacun une cellule élémentaire (11,12,13; 11',12') connectées en série,
et en ce que
- ladite source (S) est disposée et conformée de manière à occuper au moins la presque-totalité de la périphérie de la glace (2) et à laisser subsister une fenêtre d'observation desdits moyens d'affichage (4).

2. Pièce d'horlogerie (P) suivant la revendication 1, caractérisée en ce ladite source d'énergie (S) occupe la totalité de la périphérie de la glace (2) et comporte une cellule multi-jonctions (C) faite d'une superposition d'au moins trois éléments p-i-n (11,12,13) mis en série.

3. Pièce d'horlogerie (P) suivant la revendication 1, caractérisée en ce que ladite source d'énergie (S) comporte deux cellules photovoltaïques multi-jonctions (C1,C2) raccordées en série et séparées l'une de l'autre selon une ligne qui est orientée selon l'axe 3h-9h d'une pièce d'horlogerie (P).

4. Pièce d'horlogerie suivant l'une quelconque des revendications précédentes, caractérisée en ce que le premier élément p-i-n (11,11') est constitué de carbure de silicium amorphe ou d'oxyde de silicium amorphe ou de nitrite de silicium amorphe.

5. Pièce d'horlogerie suivant l'une quelconque des revendications précédentes, caractérisée en ce que le deuxième élément p-i-n (12,12') est constitué de silicium amorphe.

6. Pièce d'horlogerie suivant l'une quelconque des revendications 1 à 4, caractérisée en ce que le deuxième élément p-i-n (12,12') est constitué de carbure de silicium amorphe ou d'oxyde de silicium amorphe ou de nitrite de silicium amorphe.

7. Pièce d'horlogerie suivant l'une quelconque des revendications 1, 2, et 4 à 6, caractérisée en ce que le troisième élément p-i-n (13) est constitué de silicium amorphe.

8. Pièce d'horlogerie suivant l'une quelconque des revendications 1, 2, 4 à 6, caractérisée en ce que le troisième élément p-i-n (13) est constitué d'un alliage de germanium et de silicium amorphe.
